# FASCICULE DE BREVET EUROPEEN

(11) **EP 3 697 224 B1**
(45) Date de publication et mention de la délivrance du brevet: **10.01.2024**
(21) Numéro de dépôt: 18811598.4
(22) Date de dépôt: 16.10.2018
(51) Int. Cl.: A22C 7/00

(54) **DISPOSITIF DE FORMAGE DE DENRÉES ALIMENTAIRES SURGELÉES**
VORRICHTUNG ZUM FORMEN VON GEFRORENEN NAHRUNGSMITTELN
DEVICE FOR SHAPING FROZEN FOOD PRODUCTS

(30) Priorité: 16.10.2017 FR 1759654
(43) Date de publication de la demande: 26.08.2020
(73) Titulaire: Sysco France SAS, 75013 Paris (FR)
(72) Inventeur: OUVRY, Olivier, 76550 Aubermesnil Beaumais (FR); LEFEBVRE, Sylvain, 76770 Houppeville (FR); VILLOT, Dominique, 76370 Derchigny Petit Caux (FR)
(74) Mandataire: Vuillermoz, Bruno
(86) Numéro de dépôt international: PCT/FR2018/052565
(87) Numéro de publication internationale: WO 2019/077256

(56) Documents cités:
- EP-A1- 0 935 919
- FR-A1- 2 145 730
- FR-A1- 2 145 730
- US-A1- 2010 310 734
- US-A1- 2017 112 149

## Description

La présente invention est relative à un dispositif de formage de denrées alimentaires, à partir de portions ou morceaux issus de blocs surgelés
A titre d'exemple, le dispositif de formage suivant la présente invention peut être particulièrement appliquée aux portions de poissons ou de viande obtenues par sciage d'un bloc surgelé.

Dans notre exemple de réalisation, les portions de poissons calibrées pour la restauration institutionnelle sont communément fabriquées par sciage de blocs de filets rectangulaires à des dimensions standards. Les portions sciées sont économiques et calibrées mais présentent des formes géométriques industrielles (rectangles, triangles, trapèzes) critiquées par les consommateurs.

Pour cela on connait d'après les brevets antérieurs FR2145730 (1973), GB2280869 (1995), EP0935919 (1998), US4999206 (1991), EP2211635(2007), EP2460411 (2010), EP 825375 (2012) des dispositifs de formage permettant de donner une forme naturelle aux portions géométriques sciées.

Dans un premier type de dispositif, une découpe géométrique de poisson à l'état congelé (- 4 à -20°C) est placée dans un moule et pressée à l'aide d'un contre-moule complémentaire actionné par un piston de façon à ce que la chair de poisson occupe l'ensemble de la cavité.

La portion ainsi formée, encore congelée, est extraite du moule à l'aide d'un éjecteur. Ce type de dispositif permet d'obtenir des portions calibrées à forme naturelle mais présente plusieurs inconvénients :
- L'outil moule-contre moule est spécifique pour une forme et un grammage ce qui oblige à investir dans un nouvel outil pour chaque nouvelle forme ou nouveau grammage souhaité.
- Le poisson doit être comprimé (sa densité augmente) pour assurer une répartition uniforme de la chair dans toute la cavité. Les niveaux de pression (5 à 15 tonnes) nécessaires à cette compression dégradent la chair de poisson (séparation des myofibrilles, ruptures de membranes) et accélèrent ranciment et brunissement (libération d'enzymes favorisant lipolyse et oxydation, exposition des phospholipides membranaires à l'air et à la lumière). De même, on constate que le pouvoir de rétention d'eau est diminué.

Dans un second type de dispositif, un moule actionné par un piston vient presser une portion géométrique sur une surface plane. Avec ce type de dispositif, le volume de la cavité de formage est fixe : seule la partie de portion qui dépasse du moule est pressée et déplacée vers les espaces libres du moule.

Ce type de dispositif permet d'obtenir des portions calibrées mais présente plusieurs inconvénients :
- Le formage n'est pas uniforme car ce type de dispositif ne prend pas en compte les variations de taille des portions inhérentes au sciage. Les portions plus épaisses sont comprimées avec dégradation de la chair, les portions minces sont peu formées.
- Le moule, adapté à une taille de portion unique, est spécifique pour une forme et un grammage ce qui oblige investir dans de nouveaux moules pour chaque nouvelle formes et grammages souhaités.

Plusieurs dispositifs ont pour objet de limiter la dégradation de la chair de poisson lors du formage
Le brevet antérieur EP1016345 porte sur un dispositif pour couper et former une pluralité de trapèzes à partir d'une plaque de poisson. Les moules, ouverts aux extrémités, donnent aux trapèzes une forme de queue de poisson en arrondissant les bords. La pression nécessaire est inférieure à 1 tonne.

Ce process permet d'obtenir des produits formés sans dégrader la texture et le goût du poisson. Il est néanmoins peu flexible (1 outillgrammage) et le formage limité à de faibles déformations ne permet pas de produire une portion formée à forme naturelle chantournée.

Dans les brevets EP0935919 (1999), EP2211635(2013), on propose de réguler la pression exercée par le contre moule avec des cycles de pression/relaxation dans l'intention de minorer l'impact sur la qualité du produit.

Ce type de dispositif présente plusieurs inconvénients : il requiert un système de pression avec boucles de régulation ce qui est complexe et onéreux. De plus l'impact organoleptique est limité car, même si la déformation est progressive, au final, la chair de poisson est comprimée comme décrit précédemment.

Tous ces dispositifs préconisent des moules et contre-moules en matériaux rigides d'où l'absence de flexibilité et le besoin de comprimer le poisson pour que toute la chair se répartisse uniformément dans le volume du moule
L'objet de la présente invention consiste à la réalisation d'un dispositif de formage de portions de poisson surgelées avec des outils flexibles permettant de former différentes tailles de portions et sans comprimer la chair de poisson permettant une préservation des qualités organoleptiques du produit formé.

Le dispositif de formage de denrées alimentaires, à partir de portions ou morceaux issus de blocs surgelés comprend :
- Une plaque de moule comportant au moins une cavité de formage à l'intérieur de laquelle est disposé la portion surgelée et calibrée ou les morceaux surgelés ;
- Un contre-moule universel constitué d'un socle d'emboutissage en élastomère recouvrant la ou les cavité(s) de formage aménagée(s) dans la plaque de moule ;
- Une plaque de presse entraînée par un dispositif de pression permettant de plaquer le socle d'emboutissage en élastomère sur les rebords de la ou les cavités de formage de la plaque de moule de manière que ledit socle d'emboutissage en élastomère puisse sous l'effort de pression de ladite plaque de presse se déformer élastiquement et venir presser de façon uniforme la portion ou les morceaux à l'intérieur de la cavité de formage correspondante afin de déplacer la chair de la dite portion ou des dits morceaux à l'intérieur de ladite cavité de formage tout en respectant l'intégrité de la fibre musculaire et la qualité organoleptique du produit nouvellement formé ;
- Et des moyens d'éjections permettant d'évacuer le produit nouvellement formé de la ou des cavités de formage.

Le dispositif de formage de denrées alimentaires suivant la présente invention comprend une plaque de moule comportant des cavités de formage de profils identiques ou différents.

Le dispositif de formage de denrées alimentaires suivant la présente invention comprend une plaque de moule comportant des cavités de formage de formes naturelles pourvues de nervures ou lignes qui sont dessinées sur la surface de moulage.

Le dispositif de formage de denrées alimentaires suivant la présente invention comprend une plaque de moule comportant des cavités de formage réalisées en deux parties de formage qui une fois reliées entre elles forment le volume total de ladite cavité de formage.

Le dispositif de formage de denrées alimentaires suivant la présente invention comprend un socle d'emboutissage en élastomère qui est prévu d'une épaisseur comprise entre 15 et 40 millimètres.

Le dispositif de formage de denrées alimentaires suivant la présente invention comprend un socle d'emboutissage en élastomère qui est réalisé dans un élastomère tel que du caoutchouc nitrile.

Le dispositif de formage de denrées alimentaires suivant la présente invention comprend un socle d'emboutissage en élastomère qui est réalisé en silicone.

Le dispositif de formage de denrées alimentaires suivant la présente invention comprend un socle d'emboutissage en élastomère qui est réalisé dans un éthylène-propylène-diène monomère.

Le dispositif de formage de denrées alimentaires suivant la présente invention comprend un socle d'emboutissage en élastomère qui est réalisé dans un matériel élastique pour contact alimentaire.

Le dispositif de formage de denrées alimentaires suivant la présente invention comprend un socle d'emboutissage en élastomère qui est réalisé dans un caoutchouc naturel (NR).

Le dispositif de formage de denrées alimentaires suivant la présente invention comprend un socle d'emboutissage en élastomère qui est réalisé dans matériel élastique mono couche.

Le dispositif de formage de denrées alimentaires suivant la présente invention comprend un socle d'emboutissage en élastomère qui est réalisé dans matériel élastique multicouches constitué de matériaux et d'épaisseurs identiques ou différentes.

Le dispositif de formage de denrées alimentaires suivant la présente invention comprend un film élastomère de protection intercalé entre le socle d'emboutissage en élastomère et la portion surgelée à former.

Le dispositif de formage de denrées alimentaires suivant la présente invention comprend une plaque de moule qui est réalisée en métal ou en matériaux plastique.

Le dispositif de formage de denrées alimentaires suivant la présente invention comprend une cavité de formage de la plaque de moule qui comporte des parois dites verticales dont l'épaisseur est comprise en 4 mm et 15 mm.

Le dispositif de formage de denrées alimentaires suivant la présente invention comprend une cavité de formage de la plaque de moule dont l'extrémité libre des parois dites verticales présente un profil rond.

Le dispositif de formage de denrées alimentaires suivant la présente invention comprend un socle d'emboutissage qui est constitué d'un élastomère pour contact alimentaire dont les propriétés de dureté Shore A sont comprises entre : 30+/- 10 pt et 60+/- 10 pt.

Le dispositif de formage de denrées alimentaires suivant la présente invention comprend un socle d'emboutissage qui est constitué d'un élastomère pour contact alimentaire dont les propriétés à l'allongement à la rupture est supérieure à 250%.

Le dispositif de formage de denrées alimentaires suivant la présente invention comprend un socle d'emboutissage qui est constitué d'un élastomère pour contact alimentaire dont les propriétés à la résistance au déchirement angulaire est supérieure à 18 Nlmm.

Le dispositif de formage de denrées alimentaires suivant la présente invention comprend un socle d'emboutissage qui est constitué d'un élastomère pour contact alimentaire dont les propriétés à la déformation rémanente à la compression à -15°C est inférieure à 30%.

La description qui va suivre en regard du dessin annexé et donnée à titre d'exemple non limitatif permettra de mieux comprendre l'invention, les caractéristiques qu'elle présente, et les avantages qu'elle est susceptible de procurer :
Figures 1A à 1F sont des vues schématiques illustrant le fonctionnement du dispositif de formage suivant la présente invention.
Figures 1G et 1H sont des vues shématiques représentant le fonctionnement du dispositif de formage dont le volume de la cavité de formage de la plaque de moule peut être supérieur à la portion à former.
Figures 1I et 1J sont des vues shématiques illustrant une variante d'agencement du dispositif de formage suivant la présente invention.
Figures 2A à 2D sont des vues schématiques montrant différents exemples de réalisation de la plaque de moule du dispositif de formage suivant la présente invention.

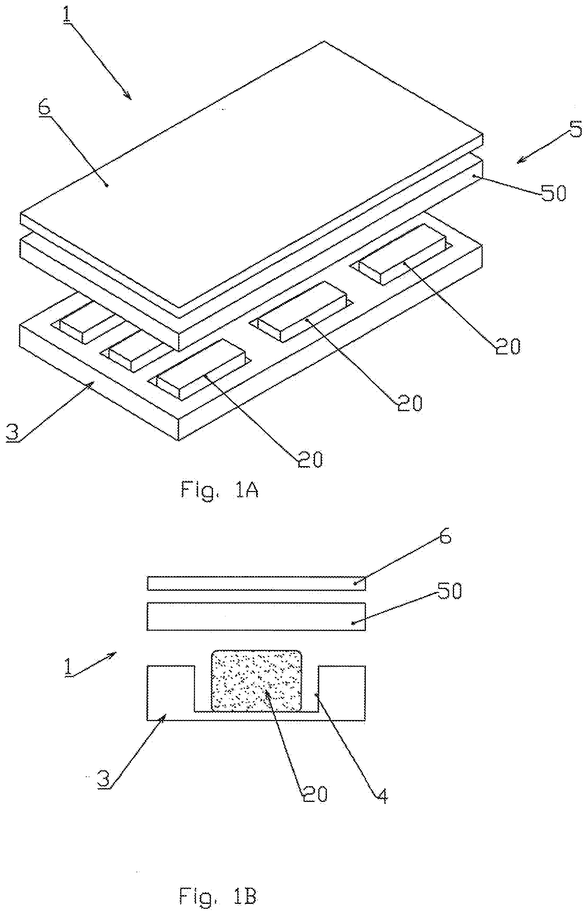

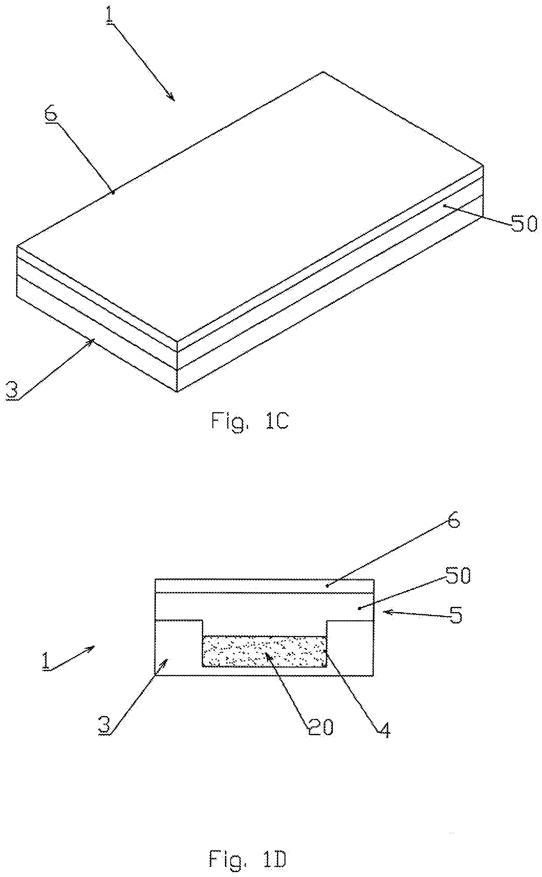

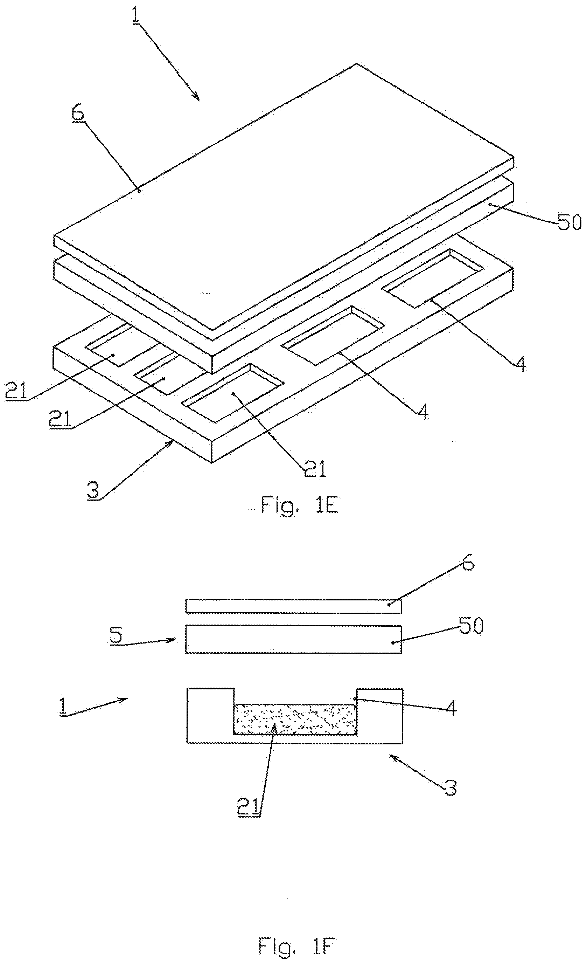

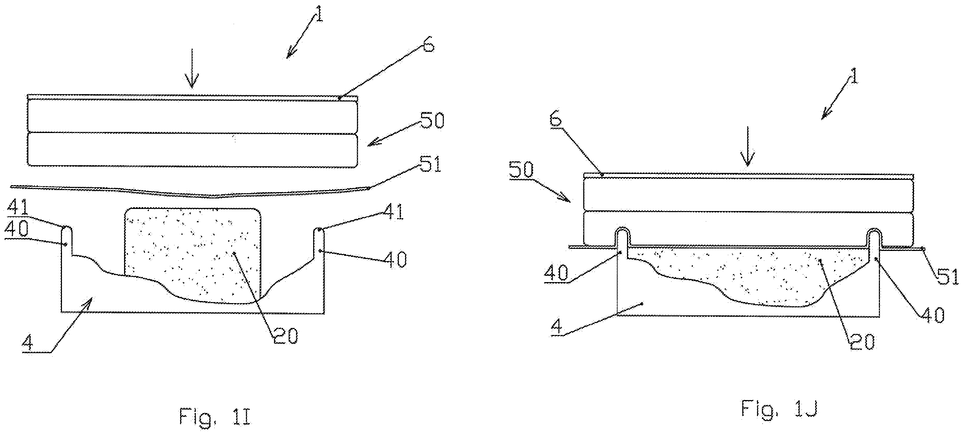

On a représenté en figure 1A à 1F un dispositfif de formage 1 de denrées alimentaires, à partir de portions ou morceaux issus de blocs surgelés comme par exemples de portions de poisson 20 obtenues à partir de blocs de filet surgelés.

Le dispositif de formage 1 comprend une plaque de moule 3 comportant au moins une cavité de formage 4 à l'intérieur de laquelle est disposé, par exemple, une portion de filet de poisson 20 surgelé et calibré.

La plaque de moule 3 peut comporter des cavités de formage 4 de profil différents et/ou de grammages différents.

La plaque de moule 3 peut comporter des cavités de formage 4 de profil et/ou de grammages identiques.

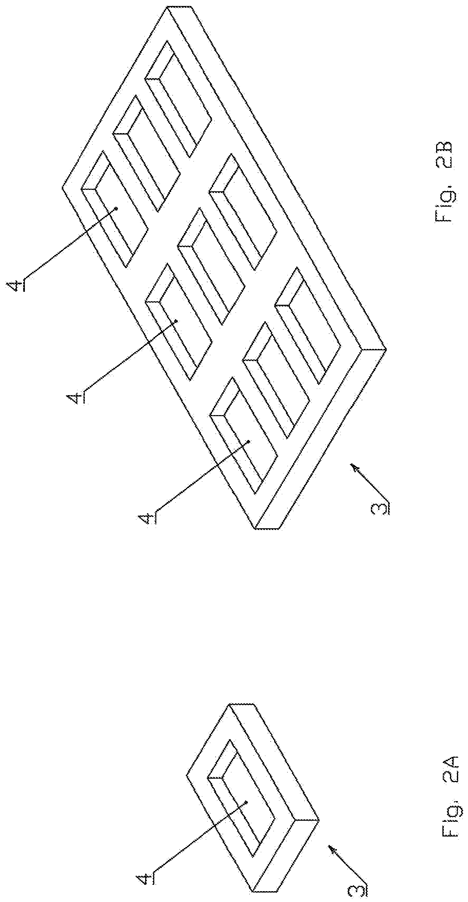

La plaque de moule 3 peut être un moule individuel comportant une cavité de formage 4 ou comporter une multitude de cavités de formage 4 (figures 2A à 2D).

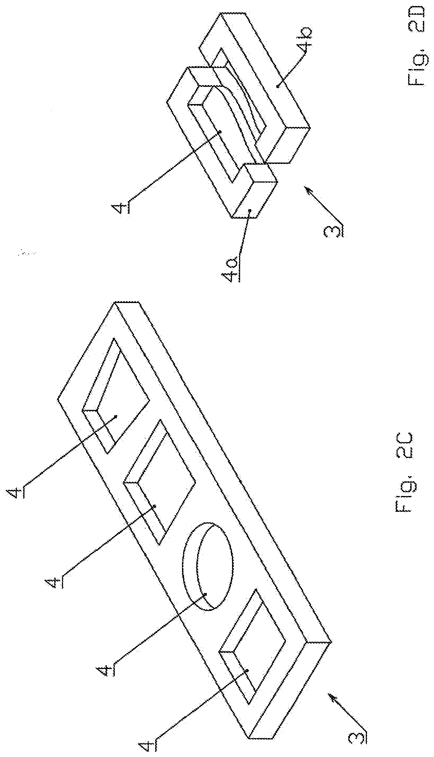

La plaque de moule 3 peut comporter une multitude de cavités de formage 4 présentant chacune des formes différentes (figure 2C).

Enfin la plaque de moule 3 peut comporter des cavités de formage 4 réalisées en deux parties soit par exemple deux demi cavités de formage 4a, 4b qui une fois reliées entre elles forment le volume total de la cavité de formage 4 à l'intérieur de laquelle sera disposée une portion de filet de poisson 20 surgelé et calibré (figure 2D).

Les deux demi cavités de formage 4a, 4b peuvent être par exemple assemblées l'une à l'autre au moyen d'une charnière.

Le dispositif de formage 1 comprend contre-moule universel 5 constitué d'un socle d'emboutissage en élastomère 50 recouvrant la ou les cavité(s) de formage 4 aménagée(s) dans la plaque de moule 3.

Le dispositif de formage 1 comprend une plaque de presse 6 entraînée par un dispositif de pression, non représenté, qui peut être une plaque rigide, permettant de plaquer le socle d'emboutissage en élastomère 50 sur les rebords de la cavité de formage 4 de la plaque de moule 3.

Sous l'effort de pression du dispositif de pression la plaque de presse 6 pousse le socle d'emboutissage en élastomère 50 qui se déforme élastiquement et vient presser la portion de poisson 20 à l'intérieur de la cavité de formage 4 correspondante afin de déplacer la chair de ladite portion de poisson à l'intérieur de ladite cavité de formage 4 tout en respectant l'intégrité de la fibre musculaire et la qualité organoleptique du produit de poisson 21 ainsi formé.

La plaque de presse 6 est déplacé par un dispositif de pression qui peut être actionné par des vérins pneumatiques ou hydrauliques, connus en soi, afin d'engendrer un effort de poussée suffisant pour déformer le socle d'emboutissage en élastomère 50 autour des rebords de la cavité de formage 4 de la plaque de moule 3.

Le volume de la cavité de formage 4 de la plaque de moule 3 peut être égal au volume de la portion à former de façon ce qui permet de déplacer la chair à l'intérieur de la cavité sans la comprimer et la détériorer.

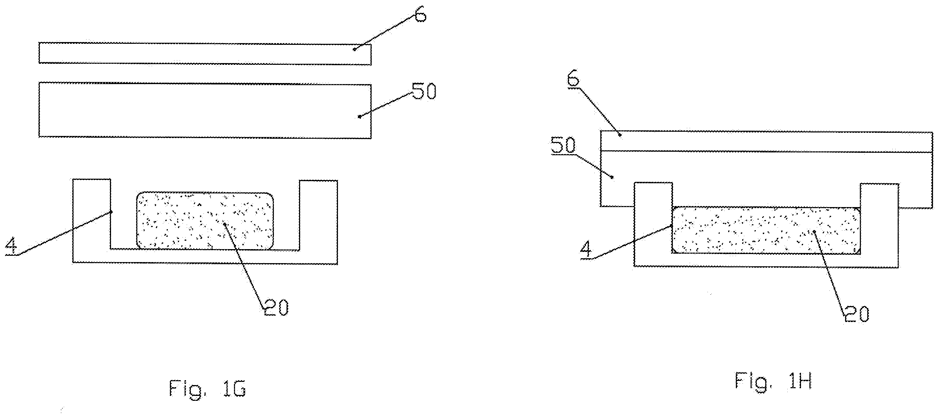

Le volume de la cavité de formage 4 de la plaque de moule 3 peut être supérieur à la portion à former. Dans ce cas le socle d'emboutissage en élastomère 50 entraîné par la plaque de presse 6 actionnée par le dispositif de pression vient transmettre la pression à la portion de poisson 20 de volume inférieur afin de réaliser le produit 21 nouvellement formé (figure 1G et 1H).

Le socle d'emboutissage en élastomère 50 est comprimé localement sur les parois de la cavité de formage 4 de la plaque de moule 3 ce qui permet de créer différents volumes de cavité de formage de différents volumes en modulant la distance d'abaissement.

Pour limiter le besoin de pression nécessaire à la compression du socle d'emboutissage en élastomère 50 sur les parois de la cavité de formage 4 de la plaque de moule 3, on peut limiter l'épaisseur des parois dites verticales 40 de la cavité de formage 4 afin que cette dernière soit comprise entre 4 mm et 15 mm (Figures 1l, 1J).

Pour protéger le socle d'emboutissage en élastomère 50 contre le cisaillement, les arêtes vives au niveau de l'extrémité libre des parois dites verticales 40 de la cavité de formage 4 de la plaque de moule 3 sont supprimées pour présenter un profil rond 41 dont le diamètre externe est calculé en fonction de l'épaisseur desdites parois (Figures et 1J).

Le socle d'emboutissage en élastomère 50 du contre-moule 5 peut être prévu d'une épaisseur comprise entre 15 et 40 millimètres.

Le socle d'emboutissage 50 peut être réalisé dans un élastomère tel que du caoutchouc nitrile ou en silicone. Le socle d'emboutissage 50 peut être réalisé dans un éthylène-propylène-diène monomère ou en caoutchouc naturel.

Le socle d'emboutissage 50 peut être réalisé dans un matériel élastique pour contact alimentaire. Le socle d'emboutissage 50 peut être réalisé dans matériel élastique mono couche.

Enfin, le socle d'emboutissage 50 peut être réalisé dans matériel élastique multicouches constitué de matériaux différents et d'épaisseurs identiques ou différentes.

Les couches du socle d'emboutissage 50 peuvent être composées du même matériau ou de matériau différent et/ou de dureté Shore équivalente ou différentes. Les différentes couches peuvent être associées ou laissées libres les unes par rapport aux autres.

A titre d'exemple le socle d'emboutissage 50 est constitué d'un élastomère pour contact alimentaire dont les propriétés peuvent être les suivantes :
- Dureté Shore A comprises entre : 30+/- 10 pt et 60+/- 10 pt ;
- Allongement à la rupture supérieure 250%, préférablement > 500%, préférablement >600%
- Module à 100% : de 1.2 à 1.5 MPa ;
- Résistance au déchirement angulaire supérieure à 18 N/mm, préférablement > 22 N/mm ;
- Déformation rémanente à la compression à -15°C inférieure à 30%, préférablement < 20%.

En figures et 1J, on a montré une variante de réalisation non limitatif, le socle d'emboutissage 50 peut être un élastomère bi couche de silicone auquel est ajouté un film de protection 51 indépendant et non solidaire dudit socle, placé entre le socle d'emboutissage 50 épais et le produit à former 20.

En plus de son rôle de protection du socle d'emboutissage 50, le film de protection 51, léger et maniable, peut être facilement retiré et/ou réinstallé et/ou remplacé ce qui facilite la maintenance et le nettoyage du dispositif de formage 1.

Il prévient également le contact entre le produit alimentaire à former 20 et la partie épaisse du socle d'emboutissage 50 permettant d'envisager l'utilisation d'un matériau non-alimentaire pour ledit socle d'emboutissage 50.

Le dispositif de formage 1 comprend un système d'éjection, non représenté, permettant la séparation du produit de poisson formée 21 de la cavité de formage 4 correspondante de la plaque de moule 3.

Le système d'éjection peut être réalisé par l'intermédiaire de jets d'air comprimé et distribué via des canaux dans le fond de la cavité de formage 4 de la plaque de moule 3 du dispositif de formage 1.

Egalement le système d'éjection peut être constitué de poussoir traversant le fond de la cavité de formage 4 de la plaque de moule 3 du dispositif de formage 1.

La cavité de formage 4 de la plaque de moule 3 peut être réalisée en métal ou dans un matériau plastique alimentaire.

Enfin lorsque la plaque de moule 3 comporte des cavités de formage 4 réalisées en deux parties 4a, 4b, la séparation de ces dernières permet lors de leur ouverture, par exemple, autour d'une charnière, d'assurer l'éjection du produit de poisson formé 21 de la plaque de moule 3.

On remarque que la plaque de moule 3 comporte des cavités de formage 4 de formes naturelles pourvues de nervures ou lignes qui sont dessinées sur la surface de moulage.

Ainsi les motifs réalisés sur le fond la cavité de formage 4 permettent de dessiner des « flocons de poissons » sur la portion de poisson 20, tandis que les lignes latérales ménagées sur le côté de la cavité permettent de matérialiser différents contours selon l'épaisseur de ladite portion.

On note que le dispositif de formage peut être utilisé pour fabriquer des portions ou morceaux 20, issus de blocs surgelés de viandes sans pour cela changer l'objet de l'invention.

## Revendications

1. Dispositif de formage (1) de denrées alimentaires, à partir de portions (20) ou morceaux, issus de blocs surgelés, **caractérisé en ce qu'**il comprend :
• Une plaque de moule (3) comportant au moins une cavité de formage (4) à l'intérieur de laquelle est disposé la portion surgelée (20) et calibrée ou les morceaux surgelés ;
• Un contre-moule universel (5) constitué d'un socle d'emboutissage en élastomère (50) recouvrant la ou les cavité(s) de formage (4) aménagée(s) dans la plaque de moule (3) ;
• Une plaque de presse (6) entraînée par un dispositif de pression permettant de plaquer le socle d'emboutissage en élastomère (50) sur les rebords de la ou les cavités de formage (4) de la plaque de moule (3) de manière que ledit socle d'emboutissage en élastomère (50) puisse sous l'effort de pression de ladite plaque de presse se déformer élastiquement et venir presser de façon uniforme la portion (20) ou les morceaux à l'intérieur de la cavité de formage (4) correspondante afin de déplacer la chair de la dite portion ou des dits morceaux à l'intérieur de ladite cavité de formage (4) tout en respectant l'intégrité de la fibre musculaire et la qualité organoleptique du produit (21) nouvellement formé ;
• Et des moyens d'éjections permettant d'évacuer le produit (21) nouvellement formé de la ou des cavités de formage (4).

2. Dispositif de formage de denrées alimentaires suivant la revendication 1, **caractérisé en ce que** la plaque de moule (3) comporte des cavités de formage (4) de profil identique ou différent.

3. Dispositif de formage de denrées alimentaires suivant la revendication 1, **caractérisé en ce que** la plaque de moule (3) comporte des cavités de formage (4) de formes naturelles pourvues de nervures ou lignes qui sont dessinées sur la surface de moulage.

4. Dispositif de formage de denrées alimentaires suivant la revendication 1, **caractérisé en ce que** la plaque de moule (3) comporte des cavités de formage (4) réalisées en deux parties de formage (4a, 4b) qui une fois reliées entre elles forment le volume total de ladite cavité de formage (4).

5. Dispositif de formage de denrées alimentaires suivant la revendication 1, **caractérisé en ce que** le socle d'emboutissage en élastomère (50) du contre-moule (5) est prévu d'une épaisseur comprise entre 15 et 40 millimètres.

6. Dispositif de formage de denrées alimentaires suivant la revendication 1, **caractérisé en ce que** le socle d'emboutissage (50) est réalisé dans un élastomère tel que du caoutchouc nitrile.

7. Dispositif de formage de denrées alimentaires suivant la revendication 1, **caractérisé en ce que** le socle d'emboutissage (50) est réalisé en silicone.

8. Dispositif de formage de denrées alimentaires suivant la revendication 1, **caractérisé en ce que** le socle d'emboutissage (50) est réalisé dans un éthylène-propylène-diène monomère.

9. Dispositif de formage de denrées alimentaires suivant la revendication 1, **caractérisé en ce que** le socle d'emboutissage (50) est réalisé en caoutchouc naturel (NR)

10. Dispositif de formage de denrées alimentaires suivant la revendication 1, **caractérisé en ce que** le socle d'emboutissage (50) est réalisé dans un matériel élastique pour contact alimentaire.

11. Dispositif de formage de denrées alimentaires suivant la revendication 1, **caractérisé en ce que** le socle d'emboutissage (50) est réalisé dans un matériel élastique mono couche.

12. Dispositif de formage de denrées alimentaires suivant la revendication 1, **caractérisé en ce que** le socle d'emboutissage (50) est réalisé dans un matériel élastique multicouches constitué de matériaux différents et d'épaisseurs identiques ou différentes.

13. Dispositif de formage de denrées alimentaires suivant la revendication 1, **caractérisé en ce que** comprend un film de protection (51) intercalé entre le socle d'emboutissage en élastomère (50) et la portion surgelée (20) à former.

14. Dispositif de formage de denrées alimentaires suivant l'une quelconque des revendications 1 à 4, **caractérisé en ce que** la cavité de formage (4) de la plaque de moule (3) comporte des parois dites verticales (40) dont l'épaisseur est comprise en 4 mm et 15 mm.

15. Dispositif de formage de denrées alimentaires suivant la revendication 14, **caractérisé en ce que** l'extrémité libre des parois dites verticales (40) de la cavité de formage (4) de la plaque de moule (3) présente un profil rond (41).

16. Dispositif de formage de denrées alimentaires suivant l'une quelconque des revendications 5 à 11, **caractérisé en ce que** le socle d'emboutissage (50) est constitué d'un élastomère pour contact alimentaire dont les propriétés de dureté Shore A sont comprises entre : 30+/-10 pt et 60+/-10 pt.

17. Dispositif de formage de denrées alimentaires suivant l'une quelconque des revendications 5 à 11, **caractérisé en ce que** le socle d'emboutissage (50) est constitué d'un élastomère pour contact alimentaire dont les propriétés à l'allongement à la rupture est supérieure à 250%.

18. Dispositif de formage de denrées alimentaires suivant l'une quelconque des revendications 5 à 11, **caractérisé en ce que** le socle d'emboutissage (50) est constitué d'un élastomère pour contact alimentaire dont les propriétés à la résistance au déchirement angulaire est supérieure à 18 Nimm.

19. Dispositif de formage de denrées alimentaires suivant l'une quelconque des revendications 5 à 11, **caractérisé en ce que** le socle d'emboutissage (50) est constitué d'un élastomère pour contact alimentaire dont les propriétés à la déformation rémanente à la compression à -15°C est inférieure à 30%.

## Patentansprüche

1. Vorrichtung (1) zum Formen von Lebensmitteln aus Portionen (20) oder Stücken, die aus tiefgefrorenen Blöcken stammen, **dadurch gekennzeichnet, dass** sie umfasst:
• Eine Formplatte (3), die mindestens eine Formmulde (4) umfasst, in die die tiefgefrorene und kalibrierte Portion (20) oder die tiefgefrorenen Stücke platziert werden;
• Eine universelle Gegenform (5), die aus einem Prägesockel aus Elastomer (50) besteht, der die in der Formplatte (3) ausgebildete(n) Formmulde(n) (4) abdeckt;
• Eine Druckplatte (6), die von einer Druckvorrichtung angetrieben wird, die es ermöglicht, den Prägesockel aus Elastomer (50) gegen die Ränder der Formmulde(n) (4) der Formplatte (3) zu drücken, so dass der Prägesockel aus Elastomer (50) unter der Druckkraft der Druckplatte elastisch verformt werden kann und die Portion (20) oder die Stücke gleichmäßig in die entsprechende Formmulde (4) drücken kann, um das Fleisch der Portion oder der Stücke in der Formmulde (4) zu verteilen, wobei die Unversehrtheit der Muskelfaser und die organoleptische Qualität des neu geformten Produkts (21) erhalten bleiben;
• Und Auswurfmittel, die es ermöglichen, das neu geformte Produkt (21) aus der oder den Formmulden (4) zu entfernen.

2. Vorrichtung zum Formen von Lebensmitteln nach Anspruch 1, **dadurch gekennzeichnet, dass** die Formplatte (3) Formmulden (4) mit gleichem oder unterschiedlichem Profil umfasst.

3. Vorrichtung zum Formen von Lebensmitteln nach Anspruch 1, **dadurch gekennzeichnet, dass** die Formplatte (3) natürlich gestaltete Formmulden (4) umfasst, die mit Maserungen oder Linien versehen sind, die auf der Formfläche eingezeichnet sind.

4. Vorrichtung zum Formen von Lebensmitteln nach Anspruch 1, **dadurch gekennzeichnet,**
**dass** die Formplatte (3) Formmulden (4) umfasst, die aus zwei Formteilen (4a, 4b) bestehen, die, wenn sie miteinander verbunden sind, das Gesamtvolumen der Formmulde (4) bilden.

5. Vorrichtung zum Formen von Lebensmitteln nach Anspruch 1, **dadurch gekennzeichnet, dass** für den Prägesockel aus Elastomer (50) der Gegenform (5) eine Dicke zwischen 15 und 40 Millimetern vorgesehen ist.

6. Vorrichtung zum Formen von Lebensmitteln nach Anspruch 1, **dadurch gekennzeichnet, dass** der Prägesockel (50) aus einem Elastomer wie Nitrilkautschuk hergestellt ist.

7. Vorrichtung zum Formen von Lebensmitteln nach Anspruch 1, **dadurch gekennzeichnet, dass** der Prägesockel (50) aus Silikon hergestellt ist.

8. Vorrichtung zum Formen von Lebensmitteln nach Anspruch 1, **dadurch gekennzeichnet, dass** der Prägesockel (50) aus Ethylen-Propylen-Dien-Kautschuk hergestellt ist.

9. Vorrichtung zum Formen von Lebensmitteln nach Anspruch 1, **dadurch gekennzeichnet, dass** der Prägesockel (50) aus Naturkautschuk (NR) hergestellt ist.

10. Vorrichtung zum Formen von Lebensmitteln nach Anspruch 1, **dadurch gekennzeichnet, dass** der Prägesockel (50) aus einem elastischen Material für Lebensmittelkontakt hergestellt ist.

11. Vorrichtung zum Formen von Lebensmitteln nach Anspruch 1, **dadurch gekennzeichnet, dass** der Prägesockel (50) aus einem einschichtigen elastischen Material hergestellt ist.

12. Vorrichtung zum Formen von Lebensmitteln nach Anspruch 1, **dadurch gekennzeichnet, dass** der Prägesockel (50) aus einem mehrschichtigen elastischen Material hergestellt ist, das aus verschiedenen Materialien mit gleicher oder unterschiedlicher Dicke besteht.

13. Vorrichtung zum Formen von Lebensmitteln nach Anspruch 1, **dadurch gekennzeichnet, dass** sie eine Schutzfolie (51) umfasst, die zwischen dem Prägesockel aus Elastomer (50) und der zu formenden tiefgefrorenen Portion (20) angeordnet ist.

14. Vorrichtung zum Formen von Lebensmitteln nach einem der Ansprüche 1 bis 4, **dadurch gekennzeichnet, dass** die Formmulde(4) der Formplatte (3) als senkrecht bezeichnete Wände (40) umfasst, deren Dicke zwischen 4 mm und 15 mm liegt.

15. Vorrichtung zum Formen von Lebensmitteln nach Anspruch 14, **dadurch gekennzeichnet, dass** das freie Ende der als senkrecht bezeichneten Wände (40) der Formmulde (4) der Formplatte (3) ein abgerundetes Profil (41) aufweist.

16. Vorrichtung zum Formen von Lebensmitteln nach einem der Ansprüche 5 bis 11, **dadurch gekennzeichnet, dass** der Prägesockel (50) aus einem Elastomer für den Lebensmittelkontakt besteht, dessen Shore-A-Härteeigenschaften zwischen: 30+/-10 pt und 60+/-10 pt liegen.

17. Vorrichtung zum Formen von Lebensmitteln nach einem der Ansprüche 5 bis 11, **dadurch gekennzeichnet, dass** der Prägesockel (50) aus einem Elastomer für den Lebensmittelkontakt besteht, dessen Eigenschaften in Bezug auf die Bruchdehnung mehr als 250% betragen.

18. Vorrichtung zum Formen von Lebensmitteln nach einem der Ansprüche 5 bis 11, **dadurch gekennzeichnet, dass** der Prägesockel (50) aus einem Elastomer für den Lebensmittelkontakt besteht, dessen Eigenschaften in Bezug auf die Winkelreißfestigkeit mehr als 18 N/mm betragen.

19. Vorrichtung zum Formen von Lebensmitteln nach einem der Ansprüche 5 bis 11, **dadurch gekennzeichnet, dass** der Prägesockel (50) aus einem Elastomer für den Lebensmittelkontakt besteht, dessen Eigenschaften in Bezug auf die Druckverformung bei -15°C weniger als 30% betragen.

## Claims

1. Device (1) for shaping food products, from portions or pieces (20) of frozen blocks, **characterised in that** it comprises:
• a mould plate (3) having at least one shaping cavity (4) inside which the calibrated frozen portion or the frozen pieces are placed (20);
• a universal backing mould (5) consisting of an elastomeric stamping base (50) covering the at least one shaping cavity (4) provided in the mould plate (3);
• a press plate (6) driven by a pressing device for urging the elastomeric stamping base (50) onto the edges of the at least one shaping cavity (4) of the mould plate (3), such that said elastomeric stamping base (50), under the pressing force of said press plate, is able to deform elastically and to press the portion (20) or the pieces uniformly inside the shaping cavity (4) in order to move the flesh of said portion or of said pieces inside the shaping cavity (4) while respecting the integrity of the muscle fibre and the organoleptic quality of the newly shaped product (21);
• and ejection means for discharging the newly formed product (21) from the at least one shaping cavity (4).

2. Device for shaping food products according to claim 1, **characterised in that** the mould plate (3) has shaping cavities (4) of an identical or different profile.

3. Device for shaping food products according to claim 1, **characterised in that** the mould plate (3) has shaping cavities (4) of natural shapes provided with ridges or lines which are drawn on the moulding surface.

4. Device for shaping food products according to claim 1, **characterised in that** the mould plate (3) has shaping cavities (4) made of two shaping parts (4a, 4b) which, once connected to one another, form the total volume of said shaping cavity (4).

5. Device for shaping food products according to claim 1, **characterised in that** the elastomeric stamping base (50) of the backing mould (5) is provided with a thickness of between 15 and 40 millimetres.

6. Device for shaping food products according to claim 1, **characterised in that** the stamping base (50) is made of an elastomer such as nitrile rubber.

7. Device for shaping food products according to claim 1, **characterised in that** the stamping base (50) is made of silicone.

8. Device for shaping food products according to claim 1, **characterised in that** the stamping base (50) is made of an ethylene-propylene-diene monomer.

9. Device for shaping food products according to claim 1, **characterised in that** the stamping base (50) is made of natural rubber (NR).

10. Device for shaping food products according to claim 1, **characterised in that** the stamping base (50) is made of an elastic material for food contact.

11. Device for shaping food products according to claim 1, **characterised in that** the stamping base (50) is made of a monolayer elastic material.

12. Device for shaping food products according to claim 1, **characterised in that** the stamping base (50) is made of a multilayer elastic material consisting of different materials and of identical or different thicknesses.

13. Device for shaping food products according to claim 1, **characterised in that** it comprises a protective film (51) inserted between the elastomeric stamping base (50) and the frozen portion (20) to be shaped.

14. Device for shaping food products according to any one of claims 1 to 4, **characterised in that** the shaping cavity (4) of the mould plate (3) has so-called vertical walls (40), the thickness of which is between 4mm and 15mm.

15. Device for shaping food products according to claim 14, **characterised in that** the free end of the so-called vertical walls (40) of the shaping cavity (4) of the mould plate (3) has a round profile (41).

16. Device for shaping food products according to any one of claims 5 to 11, **characterised in that** the stamping base (50) consists of an elastomer for food contact, the Shore A hardness properties of which are between: 30+1-10 pt and 60+1-10 pt.

17. Device for shaping food products according to any one of claims 5 to 11, **characterised in that** the stamping base (50) consists of an elastomer for food contact, the elongation at break properties of which is greater than 250%.

18. Device for shaping food products according to any one of claims 5 to 11, **characterised in that** the stamping base (50) consists of an elastomer for food contact, the resistance to angular tearing properties of which is greater than 18N/mm.

19. Device for shaping food products according to any one of claims 5 to 11, **characterised in that** the stamping base (50) consists of an elastomer for food contact, the permanent compression deformation at -15°C of which is less than 30%.
